# EUROPÄISCHE PATENTANMELDUNG

(11) **EP 4 663 002 A1**
(43) Veröffentlichungstag der Anmeldung: **17.12.2025**
(21) Anmeldenummer: 25180060.3
(22) Anmeldetag: 02.06.2025
(51) Int. Cl.: A01D 41/14, A01D 75/20

(54) **ABDECK- UND/ODER WARNEINRICHTUNG FÜR EINEN ERNTEVORSATZ EINER SELBSTFAHRENDEN ERNTEMASCHINE**

(30) Priorität: 14.06.2024 DE 102024116861
(71) Anmelder: Deere & Company, Moline, IL 61265 (US)
(72) Erfinder: Weitenberg, Clemens, Mannheim (DE); Niestegge, Jan-Wilm, Mannheim (DE); Schild, Jan-Dirk, Mannheim (DE); Schlamann, Michael, Mannheim (DE); Huening, Martin, Mannheim (DE); Effsing, Juergen, Mannheim (DE)
(74) Vertreter: Holst, Sönke

(57) **Zusammenfassung**

Eine Abdeck- und/oder Warneinrichtung (22) für einen Erntevorsatz (10) einer selbstfahrenden Erntemaschine umfasst folgende Merkmale:
der Erntevorsatz (10) weist einen Mittelteil (14) und zwei an je einem seitlichen Ende des Mittelteils (14) angebrachte Seitenteile (16, 18) auf, die gegenüber dem Mittelteil (14) um zwischen einer abgesenkten Position für die Ernte und einer angehobenen Position für eine Straßenfahrt bewegbar sind, in der sie sich oberhalb des Mittelteils (14) befinden,
die Abdeck- und/oder Warneinrichtung (22) umfasst beidseits des Mittelteils (14) jeweils ein erstes Element (26), das an einem ersten Ende um eine erste, vertikale Achse (36) schwenkbar an einem rückwärtigen Querträger (12) des Erntevorsatzes (10) angelenkt ist und um die erste Achse (36) zwischen einer Ernteposition der Abdeck- und/oder Warneinrichtung (22), in welcher sich das erste Element (26) an der Rückseite des zugehörigen Seitenteils (16, 18) befindet und einer Straßenfahrposition der Abdeck- und/oder Warneinrichtung (22) schwenkbar ist, in welcher das erste Element (26) den angehobenen Seitenteil zur Seite hin abdeckt, und
die Abdeck- und/oder Warneinrichtung (22) umfasst beidseits des Mittelteils (14) jeweils ein an zweiten, äußeren Enden des ersten Elements (26) zwischen einer Ernte- und Straßenfahrposition bewegbar befestigtes, zweites Element (28), das in der Straßenfahrposition der Abdeck- und/oder Warneinrichtung (22) den Erntevorsatz (10) nach vorn hin abdeckt,
wobei die ersten Elemente (26) jeweils aus einem ersten Bauteil (32) und einem zweiten Bauteil (34) aufgebaut sind, wobei das erste Bauteil (32) an einem ersten Ende um die erste Achse (36) schwenkbar am rückwärtigen Querträger (12) des Erntevorsatzes (10) befestigt ist, das zweite Bauteil (36) an einem ersten Ende um eine zweite, vertikale Achse (38) schwenkbar an einem zweiten Ende des ersten Bauteils (36) befestigt ist, das zweite Element (26) an einem zweiten Ende des zweiten Bauteils (34) befestigt ist und die Schwenkbewegungen der beiden Bauteile (32, 34) aus der Straßenfahr- in die Ernteposition um die erste und zweite Achse (36, 38) gegensinnig zueinander erfolgen.

## Beschreibung

Die Erfindung betrifft eine Abdeck- und/oder Warneinrichtung für einen Erntevorsatz einer selbstfahrenden Erntemaschine, wobei:
der Erntevorsatz einen Mittelteil und zwei an je einem seitlichen Ende des Mittelteils angebrachte Seitenteile aufweist, die gegenüber dem Mittelteil zwischen einer abgesenkten Position für die Ernte und einer angehobenen Position für eine Straßenfahrt bewegbar sind, in der sie sich oberhalb des Mittelteils befinden,
die Abdeck- und/oder Warneinrichtung beidseits des Mittelteils jeweils ein erstes Element umfasst, das an einem ersten Ende um eine erste, vertikale Achse schwenkbar an einem rückwärtigen Querträger des Erntevorsatzes angelenkt ist und um die erste Achse zwischen einer Ernteposition der Abdeck- und/oder Warneinrichtung, in welcher sich das erste Element an der Rückseite des zugehörigen Seitenteils befindet und einer Straßenfahrposition der Abdeck- und/oder Warneinrichtung schwenkbar ist, in welcher das erste Element den angehobenen Seitenteil zur Seite hin abdeckt, und
die Abdeck- und/oder Warneinrichtung beidseits des Mittelteils jeweils ein an zweiten, äußeren Enden des ersten Elements bewegbar befestigtes, zweites Element umfasst, das in der Straßenfahrposition der Abdeck- und/oder Warneinrichtung den Erntevorsatz nach vorn hin abdeckt.

### Stand der Technik

An selbstfahrenden Erntemaschinen finden Erntevorsätze zum Abernten und Einbringen von Erntegut Verwendung. Während Schneidwerke für Mähdrescher gewöhnlich in sich starr sind und zum Straßentransport vom Mähdrescher getrennt und auf einem Transportwagen abgelegt werden, werden Maispflücker für Mähdrescher und Maismähvorsätze für Feldhäcksler in der Regel klappbar ausgeführt. Es gibt jedoch auch klappbare Schneidwerke für Mähdrescher. Zum Straßentransport werden äußere Seitenteile der Erntevorsätze in eine Transportstellung verschwenkt, in der Regel nach oben oder innen. Sie bleiben beim Straßentransport an der Vorderseite der Erntemaschine befestigt.

Aus Sicherheitsgründen erfordern die Vorschriften einiger Länder die Anbringung von Abdeckungen und/oder Warntafeln an den Front- und Seitenflächen des Erntevorsatzes, damit die damit ausgestattete Erntemaschine am öffentlichen Straßenverkehr teilnehmen darf.

Um dem Fahrer der Erntemaschine zu ersparen, die Abdeck- und/oder Warneinrichtung vor einer Straßenfahrt von Hand anzubringen und vor dem Erntevorgang von Hand wieder abzunehmen, finden sich einerseits Ansätze, die Abdeck- und/oder Warneinrichtung an einem Fahrwerk anzubringen, das nur bei der Straßenfahrt benötigt wird (DE 10 2015 210 894 A1) und andererseits Vorschläge, derartige Einrichtungen fest am Erntevorsatz anzubringen. Die DE 10 2011 122 660 A1 schlägt vor, an jeder Seite des Erntevorsatzes für die Maisernte, der mit in eine Transportposition verschwenkbaren Seitenteilen versehen ist, eine Abdeckeinrichtung anzubringen, die sich aus drei Elementen zusammensetzt. Ein erstes Element ist um die Hochachse schwenkbar am äußeren Ende des Mittelteils des Erntevorsatzes angelenkt und ein zweites Element um die Hochachse schwenkbar am äußeren Ende des ersten Elements der Abdeckeinrichtung angebracht. Ein drittes Element ist um eine horizontale Achse an der Unterseite des zweiten Elements befestigt. Bei der Straßenfahrt befinden sich das zweite und dritte Element an der Vorderseite des Erntevorsatzes (dessen Seitenteile hochgeschwenkt sind) und das erste Element an der Seite des Erntevorsatzes. Für die Ernte wird das dritte Element nach oben gegen das zweite Element geklappt, das erste Element um die Hochachse um 90° nach hinten gedreht und das zweite Element mit dem dritten Element um 90° nach innen gedreht. Anschließend werden die Seitenteile nach unten verbracht. Die Umstellung in die Transportposition (d.h. für die Straßenfahrt) erfolgt in umgekehrter Reihenfolge. Die erwähnten Schwenkbewegungen können durch zugeordnete Aktoren bewerkstelligt werden. Bei der Ernte erstreckt sich das erste Element demnach vom Mittelteil quer zur Vorwärtsrichtung nach außen und das zweite und dritte Element vom äußeren Ende des ersten Elements nach innen. Eine ähnliche Anordnung zeigt die DE 10 2013 001 651 A1, die sich im Wesentlichen dadurch unterscheidet, dass oberhalb des ersten Elements noch ein um die horizontale Achse schwenkbares, viertes Element vorhanden ist.

### Aufgabe

Es gibt im Erntebetrieb Situationen, bei denen der Erntevorsatz in räumlicher Nähe zum stehenden Erntegutbestand aus der Transportposition in die Ernteposition verbracht werden muss, da auf dem Feld nicht mehr Platz zur Verfügung steht. Im Stand der Technik entspricht die Länge des ersten Elements der Abdeck- und/oder Warneinrichtung etwa der Abmessung des Erntevorsatzes in Vorwärtsrichtung, da nämlich das erste Element den Erntevorsatz zur Seite hin abdeckt. Bei Maismähvorsätzen mit Schneid- und Einzugstrommeln, die zwei Maisreihen gleichzeitig abernten, ist das dann nach außen schwenkende, erste Element somit mehr als ca. 1,5 m lang und u.a. aufgrund der Teilerspitzen länger als das Seitenteil breit ist. Dadurch ist nicht zu vermeiden, dass die - mit einem einteiligen ersten Element ausgestattete - Abdeck- und/oder Warneinrichtung bei engen Platzverhältnissen auf dem Feld beim Bewegen aus der Transportposition in die Ernteposition die dort stehenden Pflanzen beschädigt oder selbst beschädigt wird.

Die der Erfindung zu Grunde liegende Aufgabe wird darin gesehen, das besagte Problem zu vermeiden, d.h. die vom ersten Element beim Ein- und Ausschwenken überstrichene Breite zu reduzieren.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Abdeck- und/oder Warneinrichtung für einen Erntevorsatz einer selbstfahrenden Erntemaschine, bei der es sich beispielsweise um einen Mähdrescher, einen Feldhäcksler handeln kann, wobei der Erntevorsatz einen Mittelteil und zwei an je einem seitlichen Ende des Mittelteils angebrachte Seitenteile aufweist, die gegenüber dem Mittelteil zwischen einer abgesenkten Position für die Ernte und einer angehobenen Position für eine Straßenfahrt bewegbar sind, in der sie sich oberhalb des Mittelteils befinden, umfasst folgende Merkmale:
die Abdeck- und/oder Warneinrichtung umfasst beidseits des Mittelteils jeweils ein erstes Element, das an einem ersten Ende um eine erste, vertikale Achse schwenkbar an einem rückwärtigen Querträger des Erntevorsatzes angelenkt ist und um die erste Achse zwischen einer Ernteposition der Abdeck- und/oder Warneinrichtung, in welcher sich das erste Element an der Rückseite des zugehörigen Seitenteils befindet und einer Straßenfahrposition der Abdeck- und/oder Warneinrichtung schwenkbar ist, in welcher das erste Element den angehobenen Seitenteil zur Seite hin abdeckt,
die Abdeck- und/oder Warneinrichtung umfasst beidseits des Mittelteils jeweils ein an zweiten, äußeren Enden des ersten Elements bewegbar befestigtes, zweites Element, das in der Straßenfahrposition der Abdeck- und/oder Warneinrichtung den Erntevorsatz nach vorn hin abdeckt,
und die ersten Elemente sind jeweils aus einem ersten Bauteil und einem zweiten Bauteil aufgebaut, wobei das erste Bauteil an einem ersten Ende um die erste Achse schwenkbar am rückwärtigen Querträger des Erntevorsatzes befestigt ist, das zweite Bauteil an einem ersten Ende um eine zweite, vertikale Achse schwenkbar an einem zweiten Ende des ersten Bauteils befestigt ist, das zweite Element an einem zweiten Ende des zweiten Bauteils befestigt ist und die Schwenkbewegungen der beiden Bauteile aus der Straßenfahrposition in die Ernteposition (und umgekehrt) um die erste und zweite Achse gegensinnig zueinander erfolgen.

Mit anderen Worten umfasst das erste Element zwei Bauteile, die gegensinnig um vertikale Achsen schwenkbar sind, d.h. in der Art einer Falttür (ziehharmonikaartig) zusammengefaltet werden. Auf diese Weise bleibt die von der Abdeck- und/oder Warneinrichtung bei der Bewegung zwischen Straßenfahr- und Ernteposition überdeckte, seitlich neben dem Erntevorsatz liegende Fläche relativ klein und insbesondere innerhalb der Arbeitsbreite des Erntevorsatzes, sodass die Abdeck- und/oder Warneinrichtung auch dann, wenn die Länge der Seitenteile in Vorwärtsrichtung (und somit die Länge des ersten Elements) größer als die Breite der Seitenteile sein sollte, nicht seitlich über die Arbeitsbreite des Erntevorsatzes hinausragt und zumindest keine außerhalb der Arbeitsbreite stehenden Pflanzen oder dgl. beschädigt werden, wenn die Abdeck- und/oder Warneinrichtung aus der Straßenfahrposition in die Ernteposition bewegt wird. Zudem bewegen sich das erste und zweite Element über eine kleinere Fläche als im Stand der Technik, was Beschädigungen an Pflanzen verringert und auch in dem Bereich, über den sich das erste und zweite Element bewegen, erfolgt die Bewegung im Wesentlichen mit in Vorwärtsrichtung orientierten Elementen, d.h. die Elemente stechen quasi durch die Pflanzen hindurch, was zumindest dazu führt, dass die betroffenen Pflanzen in geringerem Maße beschädigt werden als bisher.

### Ausführungsbeispiel

In den Zeichnungen ist ein nachfolgend näher beschriebenes Ausführungsbeispiel der Erfindung dargestellt. Es zeigt:
- Fig. 1: eine Draufsicht auf einen Erntevorsatz und eine daran angebrachte Abdeck- und/oder Warneinrichtung in der Straßenfahrposition,
- Fig. 2: eine Vorderansicht auf den Erntevorsatz und die Abdeck- und/oder Warneinrichtung in der Straßenfahrposition,
- Fig. 3: eine Seitenansicht des Erntevorsatzes und der Abdeck- und/oder Warneinrichtung in der Straßenfahrposition,
- Fig. 4: die Draufsicht nach Figur 1, wobei das zweite Element der Abdeck- und/oder Warneinrichtung nach oben gedreht ist,
- Fig. 5: eine Vorderansicht des Erntevorsatzes und der Abdeck- und/oder Warneinrichtung in der Stellung nach Figur 4,
- Fig. 6: eine Draufsicht auf den Erntevorsatz und die Abdeck- und/oder Warneinrichtung in einer Stellung, in welcher das erste Element der Abdeck- und/oder Warneinrichtung teilweise nach hinten verschwenkt ist,
- Fig. 7: eine Draufsicht auf den Erntevorsatz und die Abdeck- und/oder Warneinrichtung, die sich in der Ernteposition befindet,
- Fig. 8: eine Vorderansicht des Erntevorsatzes und der Abdeck- und/oder Warneinrichtung in der Stellung nach Figur 7,
- Fig. 9: eine Draufsicht auf den Erntevorsatz und die Abdeck- und/oder Warneinrichtung nach
- Fig. 10: Figur 7, jedoch mit abgesenkten Seitenteilen des Erntevorsatzes, und eine Vorderansicht des Erntevorsatzes und der Abdeck- und/oder Warneinrichtung in der Stellung nach Figur 9.

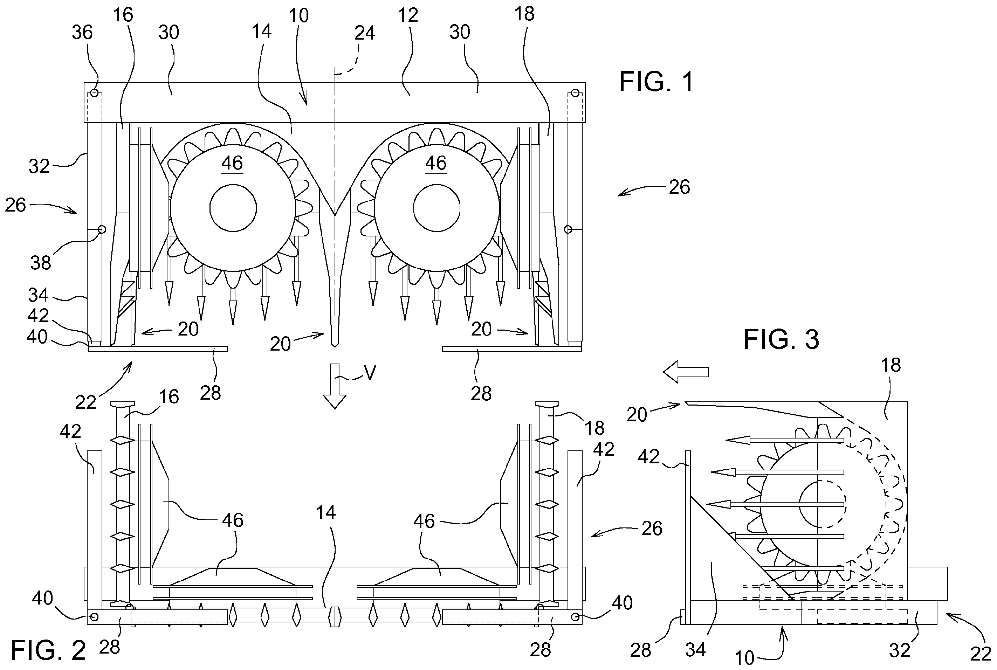

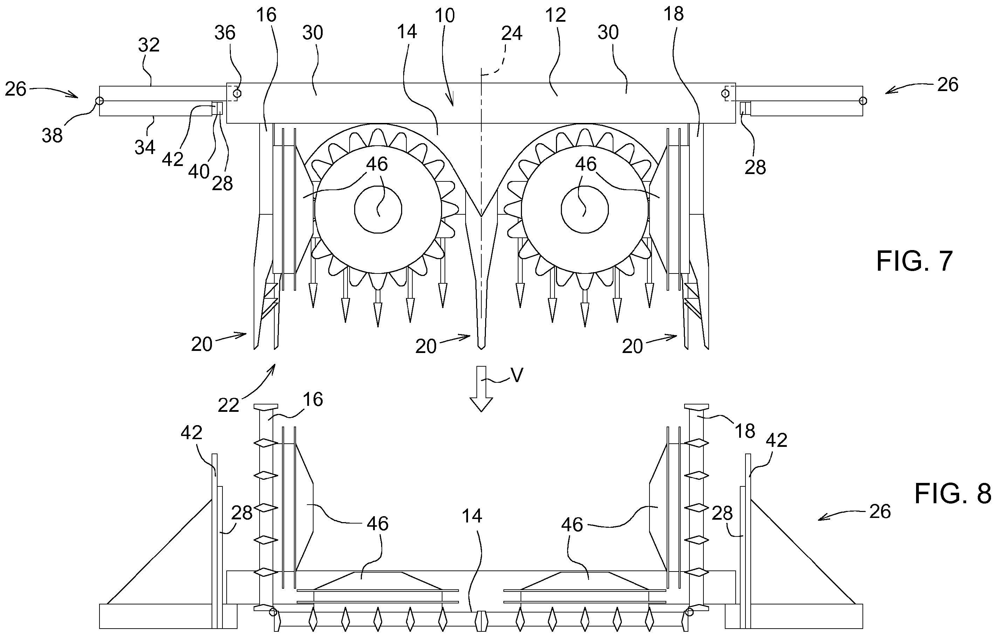

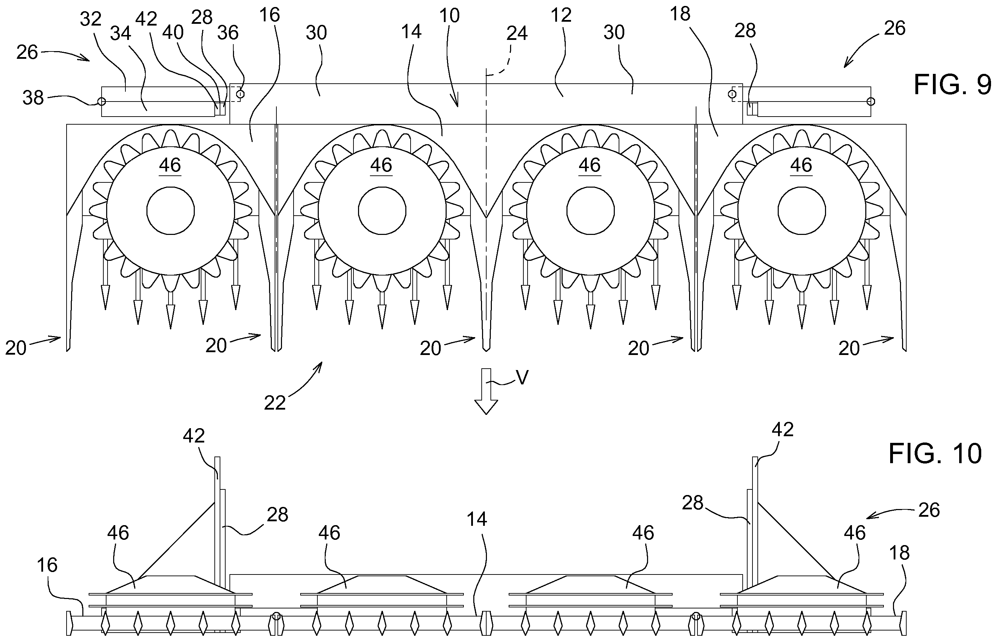

Die Figur 1 zeigt eine Draufsicht auf einen Erntevorsatz 10, der in einer Vorwärtsrichtung V über ein Feld bewegbar ist, um Erntegut aufzunehmen. Der Erntevorsatz 10 umfasst einen rückwärtigen Querträger 12, an dem ein davor positioniertes Mittelteil 14 befestigt ist. An beiden Seiten des Mittelteils 14 sind Seitenteile 16, 18 des Erntevorsatzes 10 befestigt, die zwischen einer angehobenen Position, wie in den Figuren 1 bis 7 gezeigt, und einer abgesenkten Position, wie in den Figuren 8 und 9 gezeigt, bewegbar sind. Die Seitenteile 16, 18 sind rückwärtig ebenfalls mit Querträgern 30 ausgestattet, die sich am Querträger 12, der sich rückwärtig des Mittelteils 14 befindet, beweglich abstützen. Die angehobene Position dient dazu, den Erntevorsatz 10, der beim Ernte- und Straßenfahrbetrieb an der Vorderseite einer selbstfahrenden Erntemaschine (z.B. Feldhäcksler oder Mähdrescher, nicht gezeigt) verbleibt, bei reduzierter Breite gegenüber der Arbeitsbreite beim Erntebetrieb auf einer öffentlichen Straße oder beliebigen anderen Wegen mit Breiten unterhalb der Arbeitsbreite zu transportieren. Üblicherweise und auch hier werden die Seitenteile 16, 18 gegenüber dem Mittelteil 14 (bzw. die zugehörigen Querträger 12, 30) um sich in Vorwärtsrichtung V erstreckende Achsen verschwenkt, unter Verwendung von Aktoren (Hydraulikzylinder, s. DE 100 26 500 A1). Die Seitenteile 16, 18 müssen nicht notwendigerweise einteilig sein, wie hier gezeigt, sondern könnten jeweils aus mehreren Segmenten aufgebaut sein, die zueinander in beliebige Richtungen verschwenkt werden, um den Erntevorsatz zwischen einer ausgefalteten Stellung für den Erntebetrieb, in welcher der Erntevorsatz 10 eine Arbeitsbreite definiert, in welcher er Pflanzen von einem Feld aufnimmt, und einer Stellung verminderter Transportbreite für den Straßenfahrbetrieb zu verstellen, in welcher sich die Seitenteile 16, 18 oberhalb des Mittelteils 14 befinden. Richtungsangaben, wie vorn, hinten, links und rechts, beziehen sich im Folgenden auf die Vorwärtsrichtung V.

Bei dem Erntevorsatz 10 kann es sich um einen beliebigen, mehrteiligen Erntevorsatz handeln, beispielsweise um ein Schneidwerk für einen Mähdrescher mit einem Messerbalken, einer Haspel und einem Querförderer, oder um eine Pick-up mit einer Aufnehmerwalze und einer Querförderschnecke oder um einen Maismähvorsatz für einen Feldhäcksler mit um etwa vertikale Achsen drehbaren Schneid- und Einzugstrommeln 46, wie sie in den Figuren 1 bis 10 schematisch dargestellt sind und von denen jeweils zwei am Mittelteil 14 und eine an den Seitenteilen 16, 18 angebracht sind (eine mögliche Ausführungsform der Schneid- und Einzugstrommeln 46 ist in der EP 2 401 907 A1 gezeigt und ein kompletter Erntevorsatz mit derartigen Schneid- und Einzugstrommeln 46 in der EP 3 178 308 A1, deren beider Offenbarungen durch Verweis mit in die vorliegenden Unterlagen aufgenommen werden). Derartige Erntevorsätze 10 umfassen scharfkantige Teile, wie Teilerspitzen 20, von denen ein gewisses Gefahrenpotenzial ausgeht. Zudem ragt der Erntevorsatz 10 in der Regel über die Konturen der Erntemaschine hinaus. Nach geltenden Vorschriften ist der Erntevorsatz 10 demnach, zumindest für manche Länder, mit einer Abdeck- und/oder Warneinrichtung 22 zu versehen, um das vom Erntevorsatz 10 ausgehenden Gefahrenpotenzial für Dritte zu vermindern und/oder erkennbar zu machen.

Die Abdeck- und/oder Warneinrichtung 22 umfasst zwei Teile, die spiegelsymmetrisch zur Längsmittelebene 24 des Erntevorsatzes 20 angeordnet sind. Demnach ist an beiden seitlichen Enden des Querträgers 12 jeweils ein erstes Element 26 befestigt, das Straßenfahrposition der Abdeck- und/oder Warneinrichtung 22, wie sie in den Figuren 1 bis 3 gezeigt ist, den Erntevorsatz 10 jeweils zu einer Seite hin abdeckt. Zudem ist jeweils an der Vorderseite des ersten Elements 26 ein zweites Element 28 angebracht, welches in der Straßenfahrposition der Abdeck- und/oder Warneinrichtung 22 den Erntevorsatz 10 nach vorn hin abdeckt.

Die ersten Elemente 26 sind jeweils aus einem ersten Bauteil 32 und einem zweiten Bauteil 34 aufgebaut. Das erste Bauteil 32 ist jeweils an seinem ersten, in der Figur 1 rückwärtigen Ende um eine erste, vertikal orientierte Achse 36 schwenkbar am Querträger 12 des Mittelteils 14 abgestützt. Das zweite Bauteil 34 ist an seinem ersten, in der Figur 1 rückwärtigen Ende um eine zweite, vertikal orientierte Achse 38 schwenkbar mit dem zweiten, in der Figur 1 vorderen Ende des ersten Bauteils 32 gekoppelt. Am zweiten, in der Figur 1 vorderen Ende ist das zweite Bauteil 34 mit dem zweiten Element 28 gekoppelt, in der dargestellten Ausführungsform um eine sich in Vorwärtsrichtung V erstreckende Achse 40 schwenkbar. Am zweiten Ende ist das zweite Bauteil 34 fest und starr mit einer vorderen Abdeckplatte 42 verbunden, deren Haupterstreckung vertikal ist und die sich in einer vertikalen und quer zur Vorwärtsrichtung verlaufenden Ebene erstreckt. Die vordere Abdeckplatte 42 dient dazu, gemeinsam mit dem zweiten Element, den Erntevorsatz 10 nach vorn abzudecken.

Hierzu wird auch auf die Figuren 2 und 3 verwiesen, die eine Vorder- und Seitenansicht des Erntevorsatzes 10 mit in der angehobenen Position befindlichen Seitenteilen 16, 18 und der Abdeck- und/oder Warneinrichtung 22 in der Straßenfahrposition zeigen. Die zweiten Elemente 28 decken zumindest den Mittelteil 14 des Erntevorsatzes 10 nach vorn ab, während die vorderen Abdeckplatten 42 die Seitenteile 16, 18 nach vorn abdecken und das erste und zweite Bauteil 32, 34 die Seitenteile 16, 18 zur Seite hin abdecken. Das zweite Element 28 ist in der dargestellten Ausführungsform als rechteckige Platte ausgeführt und mit reflektierenden Markierungen (z.B. rot-weiß gestreift) versehen. Das erste und zweite Bauteil 32, 34 können als äußerer, z.B. als Rohrkonstruktion ausgeführter, Rahmen mit darin angeordneten Platten oder Planen aufgebaut sein. Das zweite Bauteil 34 ist in seinem in Figur 3 vorderen Bereich höher als im hinteren Bereich, d.h. seine Oberkante sinkt nach hinten hin ab, bis auf die Höhe des ersten Bauteils 32, das seinerseits rechteckig ist. Auch das erste und/oder zweite Bauteil 32, 34 können mit Markierungen versehen sein. Zudem können Leuchten an der Abdeck- und/oder Warneinrichtung 22 angebracht werden, z.B. Leuchten zur Positions- oder Fahrtrichtungsanzeige und zur Beleuchtung der Straße oder des Erntevorsatzes 10 und/oder der Abdeck- und Warneinrichtung 22.

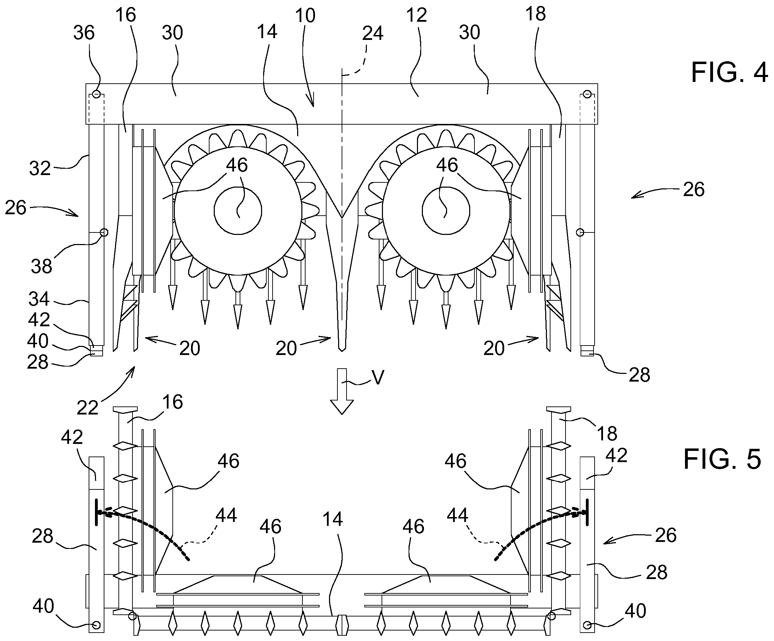

Die Figuren 4 bis 10 verdeutlichen, wie die Abdeck- und/oder Warneinrichtung 22 aus der in den Figuren 1 bis 3 gezeigten Straßenfahrposition in die Ernteposition bewegt wird, damit letztlich die Seitenteile 16, 18 des Erntevorsatzes 10 in die abgesenkte Position für die Ernte bewegt werden können. Wie bereits oben angemerkt, ist das zweite Element 28 gegenüber dem zweiten Bauteil 34 des ersten Elements 26 um die Achse 40 schwenkbar. Zudem ist das zweite Bauteil 34 gegenüber dem ersten Bauteil 32 um die vertikale, zweite Achse 38 schwenkbar und das erste Bauteil 32 um die vertikale erste Achse 36 gegenüber dem Querträger 12 des Mittelteils 14 schwenkbar. Diese Schwenkbewegungen können in einer einfachen Ausführungsform durch den Bediener der Erntemaschine 10 von Hand durchgeführt werden. Bevorzugt ist jedoch eine fremdkraftbetätigte Verstellung durch Aktoren (nicht gezeigt), die z.B. als Elektro- oder Hydraulikmotore ausgeführt sein können und die im Folgenden beschriebenen Bewegungen zeit- oder positionsgesteuert, d.h. durch eine (wie die Aktoren nicht gezeigte Steuerung) abhängig von Sensoren zur Erfassung der Position der jeweils bewegten Elemente 28 bzw. Bauteile 32, 34 steuern. Die Rückbewegungen erfolgen jeweils in umgekehrter Richtung und Reihenfolge.

Wie in den Figuren 4 und 5 gezeigt, werden zunächst die zweiten Elemente 28 aus der ursprünglichen Position, in der ihre Längserstreckung quer zur Vorwärtsrichtung V verläuft, um die Achsen 40 nach oben und außen gedreht (s. die Pfeile 44 in Figur 5). Am Ende dieser Bewegung überdecken sich die zweiten Elemente 28 und die Abdeckplatten 42, d.h. sie liegen (zumindest etwa) kongruent übereinander.

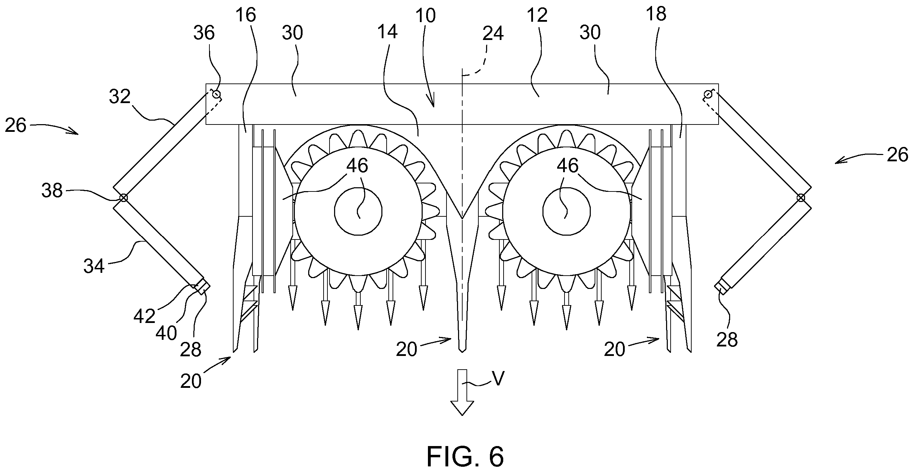

Dadurch wird an der Vorderseite des Erntevorsatzes 10 der nötige Platz geschaffen, um das erste Element 26 ziehharmonikaartig einzufalten, indem eine Drehung um die erste Achse 36 und um die zweite Achse 38 durchgeführt wird, jeweils gegensinnig, wie in den Figuren 6 und 7 gezeigt wird. Das erste Bauteil 32 wird um die Achse 36 nach außen gedreht und das zweite Bauteil 34 um die zweite Achse nach innen gedreht. Diese Drehungen erfolgen vorzugsweise zeitgleich (synchron) mit gleichen Geschwindigkeiten. Hierzu können die zugehörigen Aktoren entsprechend angesteuert werden, oder eine Bewegung eines einzigen Aktors (für jeweils den linken und rechten Teil der Abdeck- und/oder Warneinrichtung 22) oder eine mechanische Bewegung eines der Bauteile 32, 34 durch den Bediener wird auf beide Achsen 36, 38 mechanisch übertragen. Es wäre aber auch eine schrittweise Vorgehensweise möglich, bei der zunächst eine Drehung nur des ersten Bauteils 32 um die erste Achse 36 um einen Teilbereich des gesamten Verstellwinkels (der 180° beträgt), z.B. um 10° erfolgt, gefolgt von einer Drehung nur des zweiten Bauteils 34 um die erste Achse 38 um einen Teilbereich des gesamten Verstellwinkels (der 180° beträgt), z.B. um 10°, und so weiter.

Am Ende (s. Figur 7 und 8) der Verstellbewegung liegen die beiden Bauteile 32, 34 des ersten Elements 26 sandwichartig hintereinander gefaltet an der Rückseite des Erntevorsatzes 10. Die Achse 38 ist gegenüber der Achse 36 und der Längsmittelebene des ersten Bauteils 32 in der Straßenfahrposition nach innen, in Richtung auf die Längsmittelebene 24 des Erntevorsatzes 10 und der Abdeck- und/oder Warneinrichtung 22 hin versetzt, um diese Positionierung zu ermöglichen. Anstelle dessen könnte die Achse 38 auch durch ein Doppelgelenk ersetzt werden, das um zwei beabstandete Achsen jeweils schwenkbar mit den beiden Bauteilen 32, 34 verbunden ist. Nachdem die Abdeck- und/oder Warneinrichtung 22 in die in Figur 7 und 8 gezeigte Ernteposition verbracht wurde, können die Seitenteile 16, 18 können heruntergeschwenkt werden, sodass der Erntevorsatz 10 zur Ernte genutzt werden kann, wie in den Figuren 9 und 10 gezeigt.

Die Rückbewegung der Abdeck- und/oder Warneinrichtung 22 aus der Straßenfahrposition in die Ernteposition erfolgt in umgekehrter Richtung und Reihenfolge. Ein wesentlicher Vorteil der gezeigten Ausführungsform liegt neben der gegenüber dem Stand der Technik verminderten, von den beweglichen Elementen 26, 28 beim Ausklappen überstrichenen Fläche darin, dass sich dabei das vorn liegende, zweite Element 28 zunächst vertikal orientiert ist und zwischen den ggf. auf dem Feld stehenden Pflanzen hindurchstechen kann. Auch beim Herunterschwenken um die Achse 40 sticht das zweite Element 28 nur von oben her durch die Pflanzen hindurch. Analog laufen ggf. auch die Bauteile 32, 34 mehr in Vorwärtsrichtung als in Querrichtung orientiert durch den Pflanzenbestand hindurch. Dadurch werden, wenn auf dem Feld kein Platz zum Ausfalten der Abdeck- und/oder Warneinrichtung 22 an einer außerhalb des Pflanzenbestands liegenden Stelle zur Verfügung stehen sollte, weniger Pflanzen als bisher beschädigt und auch nur in kleinerem Ausmaß.

Letztlich sei noch angemerkt, dass bei größeren Arbeitsbreiten der Seitenteile 16, 18 als gezeigt, d.h. wenn diese jeweils mehr als eine einzige Schneid- und Einzugstrommel 46 aufweisen und ihrerseits auch mehrteilig ausgeführt sein sollten, vgl. EP 0 992 187 A1, das zweite Element 28 aus mehreren Bauteilen bestehen könnte, von denen ein erstes um die Achse 40 angelenkt ist (wie in den Figuren gezeigt) und ein zweites am (in der Position nach Figur 1 bis 3) inneren Ende des ersten Bauteils des zweiten Elements 28 um eine sich parallel zur Ache 40 erstreckende Achse um 180° schwenkbar daran befestigt ist, sodass das zweite Bauteil des zweiten Elements 28 zum Einfalten mittels eines Aktors oder von Hand in eine nach außen geschwenkte Stellung verbracht werden kann, in der es das erste Bauteil des zweiten Elements 28 dann überdeckt (analog der Art, wie das zweite Element in den Figuren 4 und 5 die vordere Abdeckplatte 42 überdeckt).

## Patentansprüche

1. Abdeck- und/oder Warneinrichtung (22) für einen Erntevorsatz (10) einer selbstfahrenden Erntemaschine, wobei:
der Erntevorsatz (10) einen Mittelteil (14) und zwei an je einem seitlichen Ende des Mittelteils (14) angebrachte Seitenteile (16, 18) aufweist, die gegenüber dem Mittelteil (14) um zwischen einer abgesenkten Position für die Ernte und einer angehobenen Position für eine Straßenfahrt bewegbar sind, in der sie sich oberhalb des Mittelteils (14) befinden,
die Abdeck- und/oder Warneinrichtung (22) beidseits des Mittelteils (14) jeweils ein erstes Element (26) umfasst, das an einem ersten Ende um eine erste, vertikale Achse (36) schwenkbar an einem rückwärtigen Querträger (12) des Erntevorsatzes (10) angelenkt ist und um die erste Achse (36) zwischen einer Ernteposition der Abdeck- und/oder Warneinrichtung (22), in welcher sich das erste Element (26) an der Rückseite des zugehörigen Seitenteils (16, 18) befindet und einer Straßenfahrposition der Abdeck- und/oder Warneinrichtung (22) schwenkbar ist, in welcher das erste Element (26) den angehobenen Seitenteil zur Seite hin abdeckt, und
die Abdeck- und/oder Warneinrichtung (22) beidseits des Mittelteils (14) jeweils ein an zweiten, äußeren Enden des ersten Elements (26) zwischen einer Ernte- und Straßenfahrposition bewegbar befestigtes, zweites Element (28) umfasst, das in der Straßenfahrposition der Abdeck- und/oder Warneinrichtung (22) den Erntevorsatz (10) nach vorn hin abdeckt,
**dadurch gekennzeichnet, dass** die ersten Elemente (26) jeweils aus einem ersten Bauteil (32) und einem zweiten Bauteil (34) aufgebaut sind, wobei das erste Bauteil (32) an einem ersten Ende um die erste Achse (36) schwenkbar am rückwärtigen Querträger (12) des Erntevorsatzes (10) befestigt ist, das zweite Bauteil (36) an einem ersten Ende um eine zweite, vertikale Achse (38) schwenkbar an einem zweiten Ende des ersten Bauteils (36) befestigt ist, das zweite Element (26) an einem zweiten Ende des zweiten Bauteils (34) befestigt ist und die Schwenkbewegungen der beiden Bauteile (32, 34) aus der Straßenfahrin die Ernteposition um die erste und zweite Achse (36, 38) gegensinnig zueinander erfolgen.

2. Abdeck- und/oder Warneinrichtung (22) nach Anspruch 1, wobei die Schwenkbewegungen der beiden Bauteile (32, 34) um die erste und zweite Achse (36, 38) zeitgleich oder schrittweise nacheinander jeweils über Teilbereiche des Verstellbereichs erfolgen.

3. Abdeck- und/oder Warneinrichtung (22) nach Anspruch 2, wobei die Schwenkbewegungen der beiden Bauteile (32, 34) um die erste und zweite Achse (36, 38) zeitgleich und mit gleichen Geschwindigkeiten erfolgen.

4. Abdeck- und/oder Warneinrichtung (22) nach einem der Ansprüche 1 bis 3, wobei das zweite Element (28) um eine horizontale, sich bei in der Straßenfahrposition der Abdeckeinrichtung (22) in Vorwärtsrichtung (V) erstreckende Achse (40) gegenüber dem zweiten Bauteil (34) zwischen einer Straßenfahrposition, in welcher sich das zweite Element (28) nach innen, in Richtung auf die Längsmittelebene (24) des Erntevorsatzes (10) zu erstreckt, und einer Ernteposition beweglich ist, in der sich das zweite Element (28) vertikal erstreckt.

5. Abdeck- und/oder Warneinrichtung (22) nach einem der Ansprüche 1 bis 4, wobei die Bewegung des zweiten Elements (28) aus der Straßenfahr- in die Ernteposition zeitlich vor der Verschwenkung des ersten Elements (26) erfolgt.

6. Abdeck- und/oder Warneinrichtung (22) nach einem der Ansprüche 1 bis 5, wobei die zweite Achse (38) gegenüber der ersten Achse (36) in der Straßenfahrposition nach innen, in Richtung auf die Längsmittelebene (24) versetzt angeordnet ist.

7. Abdeck- und/oder Warneinrichtung (22) nach einem der Ansprüche 1 bis 6, wobei die Bewegung der Seitenteile (16, 18) des Erntevorsatzes (10) zwischen der angehobenen und abgesenkten Position zeitlich nach dem Verstellen der Abdeck- und/oder Warneinrichtung (22) aus der Straßenfahr- in die Ernteposition erfolgt.

8. Abdeck- und/oder Warneinrichtung (22) nach einem der vorhergehenden Ansprüche, wobei die Verstellung des ersten und zweiten Elements (26, 28) durch Aktoren erfolgt, die abhängig von Sensoren zur Erfassung der Position der jeweils bewegten Elemente (28) und Bauteile (32, 34) durch eine Steuerung kontrolliert werden.

9. Erntevorsatz (10) mit einer Abdeck- und/oder Warneinrichtung (22) nach einem der vorhergehenden Ansprüche.

10. Selbstfahrende Erntemaschine, insbesondere Feldhäcksler oder Mähdrescher, mit einem Erntevorsatz (10) nach Anspruch 9.

## Geänderte Patentansprüche

### Geänderte Patentansprüche gemäss Regel 137(2) EPÜ.

1. Erntevorsatz (10) einer selbstfahrenden Erntemaschine mit einer Abdeck- und/oder Warneinrichtung (22), wobei:
der Erntevorsatz (10) einen Mittelteil (14) und zwei an je einem seitlichen Ende des Mittelteils (14) angebrachte Seitenteile (16, 18) aufweist, die gegenüber dem Mittelteil (14) um zwischen einer abgesenkten Position für die Ernte und einer angehobenen Position für eine Straßenfahrt bewegbar sind, in der sie sich oberhalb des Mittelteils (14) befinden,
die Abdeck- und/oder Warneinrichtung (22) beidseits des Mittelteils (14) jeweils ein erstes Element (26) umfasst, das an einem ersten Ende um eine erste, vertikale Achse (36) schwenkbar an einem rückwärtigen Querträger (12) des Erntevorsatzes (10) angelenkt ist und um die erste Achse (36) zwischen einer Ernteposition der Abdeck- und/oder Warneinrichtung (22), in welcher sich das erste Element (26) an der Rückseite des zugehörigen Seitenteils (16, 18) befindet und einer Straßenfahrposition der Abdeck- und/oder Warneinrichtung (22) schwenkbar ist, in welcher das erste Element (26) den angehobenen Seitenteil zur Seite hin abdeckt, und
die Abdeck- und/oder Warneinrichtung (22) beidseits des Mittelteils (14) jeweils ein an zweiten, äußeren Enden des ersten Elements (26) zwischen einer Ernte- und Straßenfahrposition bewegbar befestigtes, zweites Element (28) umfasst, das in der Straßenfahrposition der Abdeck- und/oder Warneinrichtung (22) den Erntevorsatz (10) nach vorn hin abdeckt,
wobei die ersten Elemente (26) jeweils aus einem ersten Bauteil (32) und einem zweiten Bauteil (34) aufgebaut sind, wobei das erste Bauteil (32) an einem ersten Ende um die erste Achse (36) schwenkbar am rückwärtigen Querträger (12) des Erntevorsatzes (10) befestigt ist,
**dadurch gekennzeichnet, dass** das zweite Bauteil (36) an einem ersten Ende um eine zweite, vertikale Achse (38) schwenkbar an einem zweiten Ende des ersten Bauteils (36) befestigt ist, das zweite Element (26) an einem zweiten Ende des zweiten Bauteils (34) befestigt ist und die Schwenkbewegungen der beiden Bauteile (32, 34) aus der Straßenfahrin die Ernteposition um die erste und zweite Achse (36, 38) gegensinnig zueinander erfolgen.

2. Erntevorsatz (10) nach Anspruch 1, wobei die Schwenkbewegungen der beiden Bauteile (32, 34) um die erste und zweite Achse (36, 38) zeitgleich oder schrittweise nacheinander jeweils über Teilbereiche des Verstellbereichs erfolgen.

3. Erntevorsatz (10) nach Anspruch 2, wobei die Schwenkbewegungen der beiden Bauteile (32, 34) um die erste und zweite Achse (36, 38) zeitgleich und mit gleichen Geschwindigkeiten erfolgen.

4. Erntevorsatz (10) nach einem der Ansprüche 1 bis 3, wobei das zweite Element (28) um eine horizontale, sich bei in der Straßenfahrposition der Abdeckeinrichtung (22) in Vorwärtsrichtung (V) erstreckende Achse (40) gegenüber dem zweiten Bauteil (34) zwischen einer Straßenfahrposition, in welcher sich das zweite Element (28) nach innen, in Richtung auf die Längsmittelebene (24) des Erntevorsatzes (10) zu erstreckt, und einer Ernteposition beweglich ist, in der sich das zweite Element (28) vertikal erstreckt.

5. Erntevorsatz (10) nach einem der Ansprüche 1 bis 4, wobei die Bewegung des zweiten Elements (28) aus der Straßenfahr- in die Ernteposition zeitlich vor der Verschwenkung des ersten Elements (26) erfolgt.

6. Erntevorsatz (10) nach einem der Ansprüche 1 bis 5, wobei die zweite Achse (38) gegenüber der ersten Achse (36) in der Straßenfahrposition nach innen, in Richtung auf die Längsmittelebene (24) versetzt angeordnet ist.

7. Erntevorsatz (10) nach einem der Ansprüche 1 bis 6, wobei die Bewegung der Seitenteile (16, 18) des Erntevorsatzes (10) zwischen der angehobenen und abgesenkten Position zeitlich nach dem Verstellen der Abdeck- und/oder Warneinrichtung (22) aus der Straßenfahr- in die Ernteposition erfolgt.

8. Erntevorsatz (10) nach einem der vorhergehenden Ansprüche, wobei die Verstellung des ersten und zweiten Elements (26, 28) durch Aktoren erfolgt, die abhängig von Sensoren zur Erfassung der Position der jeweils bewegten Elemente (28) und Bauteile (32, 34) durch eine Steuerung kontrolliert werden.

9. Selbstfahrende Erntemaschine, insbesondere Feldhäcksler oder Mähdrescher, mit einem Erntevorsatz (10) nach einem der Ansprüche 1 bis 8.
